# EUROPEAN PATENT SPECIFICATION

(11) **EP 3 060 004 B1**
(45) Date of publication and mention of the grant of the patent: **26.12.2018**
(21) Application number: 14800353.6
(22) Date of filing: 09.06.2014
(51) Int. Cl.: H04W 36/18

(54) **METHOD AND DEVICE FOR IMPROVING SUCCESS RATE OF SOFT HANDOFF**
VERFAHREN UND VORRICHTUNG ZUR ERHÖHUNG DER ERFOLGSRATE BEI SANFTEN WEITERREICHUNGEN
PROCÉDÉ ET DISPOSITIF POUR AMÉLIORER LE TAUX DE RÉUSSITE DE TRANSFERT INTERCELLULAIRE SANS COUPURE

(30) Priority: 18.10.2013 CN 201310493801
(43) Date of publication of application: 24.08.2016
(73) Proprietor: ZTE Corporation, Shenzhen, Guangdong 518057 (CN)
(72) Inventor: KONG, Xiaoling, Shenzhen Guangdong 518057 (CN); HUO, Yi, Shenzhen Guangdong 518057 (CN)
(74) Representative: Regimbeau
(86) International application number: PCT/CN2014/079519
(87) International publication number: WO 2014/187399

(56) References cited:
- EP-A2- 0 845 877
- WO-A2-98/25432
- CN-A- 101 400 079
- CN-A- 101 938 690
- CN-A- 102 204 332
- US-A- 5 828 659
- ERICSSON: "Cell timing measurement for soft handover", 3GPP DRAFT; R1-99844_TIMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Espoo, Finland; 19990708, 8 July 1999 (1999-07-08), XP050089093, [retrieved on 1999-07-08]

## Description

### Technical Field

The present disclosure relates to the technical field of wireless communications, and in particular, to a method and a device for improving success rate of soft handover.

### Technical Background

Soft handover technology in a third-generation mobile communication system refers to that a User Equipment (UE) keeps a plurality of wireless links with different cells simultaneously so as to guarantee the smooth handover of services, wherein a plurality of cells that are linked with the UE simultaneously are also referred to as a macrodiversity.

The specific process of soft handover is as follows:
1) The network side sends a measurement control message to a UE according to the cell in which the UE is located;
2) After the UE receives the measurement control message, a measurement is performed according to the parameter in the message;
3) When it reaches a report threshold, the UE reports a measurement report message;
4) After the network side receives the measurement report message from the UE, a handover determination is made;
5) If the network side determines that handover is required, it sends a handover command (for adding a wireless links or deleting a wireless link) to the UE; and
6) A handover is performed by the UE according to the handover command.

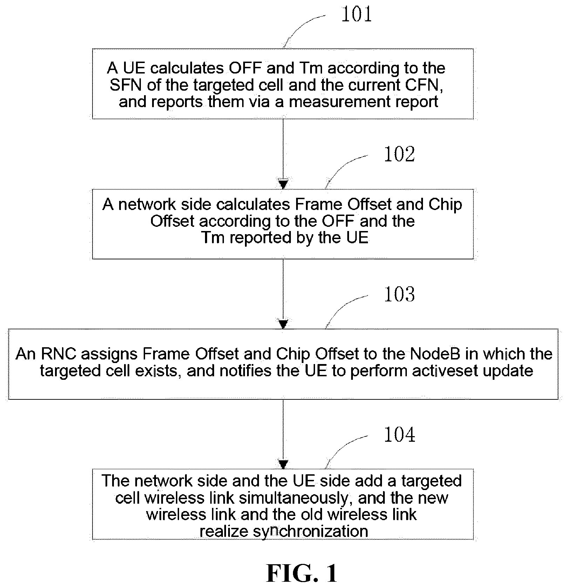

In above process 3), the measurement report message reported by the UE contains the signal quality and the time delay information of the targeted cell, and the network side calculates an offset of a newly-built wireless link according to the time delay information reported by the UE, so that the Connection Frame Number (CFN) of the newly-built wireless link may be kept consistent with that of the old wireless link; Fig. 1 is a flow chart showing a soft handover for adding a wireless link, and includes the steps of:
101) A UE calculates an offset parameter (OFF) and a maximum delay expansion (Tm) according to the system frame number (SFN) of the targeted cell and the current CFN, and reports them via a measurement report;
102) A network side calculates Frame Offset and Chip Offset according to the OFF and the Tm reported by the UE;
103) An RNC configure the Frame Offset and the Chip Offset to the NodeB in which the targeted cell is located, and notifies the UE to perform activation and updating;
104) The network side and the UE side add a targeted cell wireless link simultaneously, to realize the synchronization of the new wireless link and the old wireless link.

If an error occurs in the time delay information reported by the UE, the newly-built wireless link cannot keep synchronization with the old wireless link, and hence the soft handover would fail, thereby causing a call drop. Further relevant technologies are also known from WO 9825432 A2 (ERICSSON TELEFON AB L M [SE]) 11 June 1998 (1998-06-11) which relates to a method of seamless soft handoff in a CDMA cellular communications system, US 5828659 A (TEDER PAUL [SE] ET AL) 27 October 1998 (1998-10-27) which relates to a method of time alignment of transmission in a down-link of CDMA system, EP 0845877 A2 (OKI ELECTRIC IND CO LTD [JP]) 3 June 1998 (1998-06-03) which relates to a mobile communication system for accomplishing handover with phase difference of framesync signals corrected, and ERICSSON: "Cell timing measurement for soft handover", 3GPP DRAFT; R1-99844_IMING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Espoo, Finland; 19990708, 8 July 1999 (1999-07-08), XP050089093, [retrieved on 1999-07-08].

### Summary

It is an object of the embodiments of the disclosure to provide a method and a device for improving success rate of soft handover, thereby solving the problem in the prior art that, when an error occurs in the time delay information reported by the UE, the newly-built wireless link cannot keep synchronization with the old wireless link, so that the soft handover would fail, thereby causing a call drop.

The above problem is solved by a method of soft handover according to claim 1, and a device of soft handover according to claim 5. Also provided is a method of soft handover, which includes the steps of:
obtaining, by a network side, a time delay difference value between a current cell and a targeted cell according to time delay information of the current cell and time delay information of the targeted cell that are respectively reported by a user equipment (UE);
obtaining a stabilized time delay difference value by performing stability processing on the time delay difference value;
obtaining corrected time delay information of the targeted cell by correcting the time delay information of the targeted cell with the stabilized time delay difference value; and
performing a soft handover processing by using the corrected time delay information of the targeted cell.

Preferably, the performing a stability processing on the time delay difference value includes:
performing an abnormal data eliminating processing and a filtration processing on the time delay difference value, to obtain a converged time delay difference value;
where, the abnormal data eliminating processing refers to eliminating data in the time delay difference value in which the difference value between the data and its adjacent data exceeds a preset adjacent difference value threshold.

Preferably, the performing a stability processing on the time delay difference value further includes:
determining a stability on the converged time delay difference value, in order to obtain a stabilized time delay difference value;
where, the stability refers to that the difference value between adjacent two time delay difference values in the converged time delay difference value is smaller than the preset adjacent difference value threshold.

Preferably, the time delay information includes an OFF parameter and a Tm parameter.

Preferably, the step of correcting the time delay information of the targeted cell with the stabilized time delay difference value includes:
comparing an OFF parameter difference value and a Tm parameter difference value of the time delay difference value between the current cell and the targeted cell with a stabilized OFF parameter difference value and a stabilized Tm parameter difference value of the stabilized time delay difference value, respectively; and
correcting the OFF parameter and the Tm parameter of the targeted cell, when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold.

Preferably, the step of performing a soft handover processing by using the corrected time delay information of the targeted cell includes:
calculating Frame Offset and Chip Offset by using the corrected OFF parameter and Tm parameter of the targeted cell;
assigning, by a radio network controller RNC, the Frame Offset and the Chip Offset to a NodeB in which the targeted cell is located, and notifying the UE to update an active set;
adding a new targeted cell wireless link simultaneously to the network side and the UE side, so as to keep a synchronization of the new link and the old link, thereby realizing a successful soft handover processing.

Another embodiment of the disclosure provides a device for improving success rate of soft handover, which includes:
a time delay difference value obtaining module, configured for obtaining a time delay difference value between a current cell and a targeted cell by a network side according to time delay information of the current cell and time delay information of the targeted cell that are respectively reported by a user equipment (UE);
a stabilized time delay difference value obtaining module, configured for obtaining a stabilized time delay difference value by performing stability processing on the time delay difference value;
a correcting module, configured for obtaining corrected time delay information of the targeted cell by correcting the time delay information of the targeted cell with the stabilized time delay difference value; and
a soft handover processing module, configured for performing a soft handover processing by using the corrected time delay information of the targeted cell.

Preferably, the stabilized time delay difference value obtaining module includes:
an eliminating and filtering unit, configured for performing an abnormal data eliminating processing and a filtration processing on the time delay difference value, to obtain a converged time delay difference value; and
a stability determining unit, configured for performing stability determination on the converged time delay difference value in order to obtain a stabilized time delay difference value.
where, the abnormal data eliminating process refers to eliminating data in the time delay difference value in which the difference value between the data and its adjacent data exceeds a preset adjacent difference value threshold; and the stability refers to that the difference value between adjacent two time delay difference values in the converged time delay difference value is smaller than the preset adjacent difference value threshold.

Preferably, the correcting module includes:
a comparing unit, configured for comparing an OFF parameter difference value and a Tm parameter difference value of the time delay difference value between the current cell and the targeted cell with a stabilized OFF parameter difference value and a stabilized Tm parameter difference value of the stabilized time delay difference value, respectively;
a correcting unit, configured for correcting the OFF parameter and the Tm parameter of the targeted cell when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold;
where, the time delay information includes an OFF parameter and a Tm parameter.

Preferably, the soft handover processing module includes:
a calculating unit, configured for calculating Frame Offset and Chip Offset by using the corrected OFF parameter and Tm parameter of the targeted cell;
an assigning unit, configured for assigning the Frame Offset and the Chip Offset to a NodeB in which the targeted cell is located, by a Radio Network Controller (RNC), and notifying the UE to update an active set; and
a wireless link adding unit, configured for adding a new targeted cell wireless link simultaneously to the network side and the UE side, so as to keep a synchronization of the new link and the old link, thereby realizing a successful soft handover processing.

In comparison with the prior art, the embodiments of the disclosure have the following beneficial effects:
with the embodiments of the disclosure, the accuracy of the time delay information in a measurement report can be detected in time and thus be corrected in time, thereby improving the success rate of soft handover and lowering the call drop rate.

Embodiments and/or examples of the following description which are not covered by the appended claims are considered as not being part of the present invention.

### Description of Drawings

Fig. 1 is a flow chart showing a soft handover for adding a wireless link in the prior art, which has no correction function;
Fig. 2 is a flow chart showing a method for improving success rate of soft handover according to the disclosure;
Fig. 3 is a schematic diagram showing a device for improving success rate of soft handover according to the disclosure;
Fig. 4 is a flow chart showing a method for improving success rate of soft handover by correcting the time delay information in a measurement report according to an embodiment of the disclosure; and
Fig. 5 is a schematic view showing a structure of a device for improving success rate of soft handover by correcting the time delay information in a measurement report according to an embodiment of the disclosure.

### Detailed description of the Embodiment

Preferred embodiments of the disclosure will be illustrated in detail below in conjunction with the drawings. It should be understood that, the preferred embodiments illustrated below are only used for illustrating and explaining the disclosure, rather than limiting the disclosure.

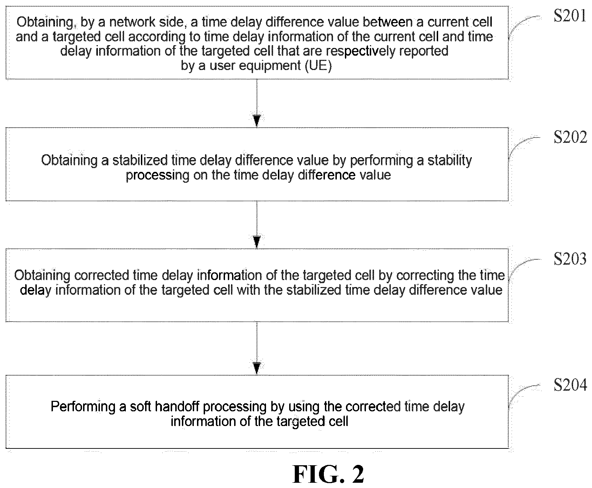

Fig. 2 shows a flow chart showing a method for improving success rate of soft handover according to the disclosure. As shown in Fig. 2, the method includes the steps of:
Step S201: obtaining, by a network side, a time delay difference value between a current cell and a targeted cell according to time delay information of the current cell and time delay information of the targeted cell that are respectively reported by a user equipment (UE);
Step S202: obtaining a stabilized time delay difference value by performing stability processing on the time delay difference value;
Step S203: obtaining corrected time delay information of the targeted cell by correcting the time delay information of the targeted cell with the stabilized time delay difference value; and
Step S204: performing a soft handover processing by using the corrected time delay information of the targeted cell.

Specifically, the performing a stability processing on the time delay difference value includes: performing an abnormal data eliminating processing and a filtration processing on the time delay difference value, to obtain a converged time delay difference value; and performing stability determination on the converged time delay difference value, in order to obtain a stabilized time delay difference value. The abnormal data eliminating processing refers to eliminating data in the time delay difference value in which the difference value between the data and its adjacent data exceeds a preset adjacent difference value threshold; the stability refers to that the difference value between adjacent two time delay difference values in the converged time delay difference value is smaller than the preset adjacent difference value threshold. The time delay information includes an OFF parameter and a Tm parameter.

In the disclosure, the step of correcting the time delay information of the targeted cell with the stabilized time delay difference value includes: comparing an OFF parameter difference value and a Tm parameter difference value of the obtained time delay difference value between the current cell and the targeted cell with a stabilized OFF parameter difference value and a stabilized Tm parameter difference value of the obtained stabilized time delay difference value; correcting the OFF parameter and the Tm parameter of the targeted cell when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold.

In the disclosure, the step of performing a soft handover processing by using the corrected time delay information of the targeted cell includes: calculating Frame Offset and Chip Offset by using the corrected OFF parameter and Tm parameter of the targeted cell; assigning, by a radio network controller RNC, the Frame Offset and the Chip Offset to a NodeB in which the targeted cell is located, and notifying the UE to update an active set; adding a new targeted cell wireless link simultaneously to the network side and the UE side so as to keep a synchronization of the new link and the old link, thereby realizing a successful soft handover processing.

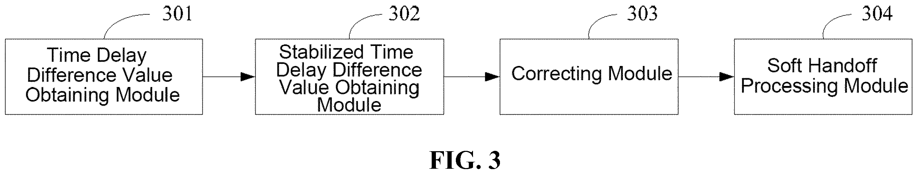

Fig. 3 is a schematic diagram showing a device for improving success rate of soft handover according to the disclosure. As shown in Fig. 3, the device includes: a time delay difference value obtaining module 301, configured for obtaining a time delay difference value between a current cell and a targeted cell by a network side according to time delay information of the current cell and time delay information of the targeted cell that are respectively reported by a user equipment (UE); a stabilized time delay difference value obtaining module 302, configured for obtaining a stabilized time delay difference value by performing a stability processing on the time delay difference value; a correcting module 303, configured for obtaining corrected time delay information of the targeted cell by correcting the time delay information of the targeted cell with the stabilized time delay difference value; and a soft handover processing module 304, configured for performing a soft handover processing by using the corrected time delay information of the targeted cell.

The stabilized time delay difference value obtaining module 302 includes: an eliminating and filtering unit, configured for performing an abnormal data eliminating processing and a filtration processing on the time delay difference value, and obtaining a converged time delay difference value; and a stability determining unit, configured for performing a stability determination on the converged time delay difference value, in order to obtain a stabilized time delay difference value. The abnormal data eliminating processing refers to eliminating data in the time delay difference value in which the difference value between the data and its adjacent data exceeds a preset adjacent difference value threshold; the stability refers to that the difference value between adjacent two time delay difference values in the converged time delay difference value is smaller than the preset adjacent difference value threshold.

The correcting module 303 includes: a comparing unit, configured for comparing the OFF parameter difference value and the Tm parameter difference value of the obtained time delay difference value between the current cell and the targeted cell with a stabilized OFF parameter difference value and a stabilized Tm parameter difference value of the stabilized time delay difference value; and a correcting unit, configured for correcting the OFF parameter and the Tm parameter of the targeted cell when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold. The time delay information includes an OFF parameter and a Tm parameter.

The soft handover processing module 304 includes: a calculating unit, configured for calculating Frame Offset and Chip Offset by using the corrected OFF parameter and Tm parameter of the targeted cell; an assigning unit, configured for assigning the Frame Offset and the Chip Offset to a NodeB in which the targeted cell is located, by a radio network controller RNC, and notifying the UE to update an active set; and a wireless link adding unit, configured for adding a new targeted cell wireless link simultaneously to the network side and the UE side so as to keep a synchronization of the new link and the old link, thereby realizing a successful soft handover processing.

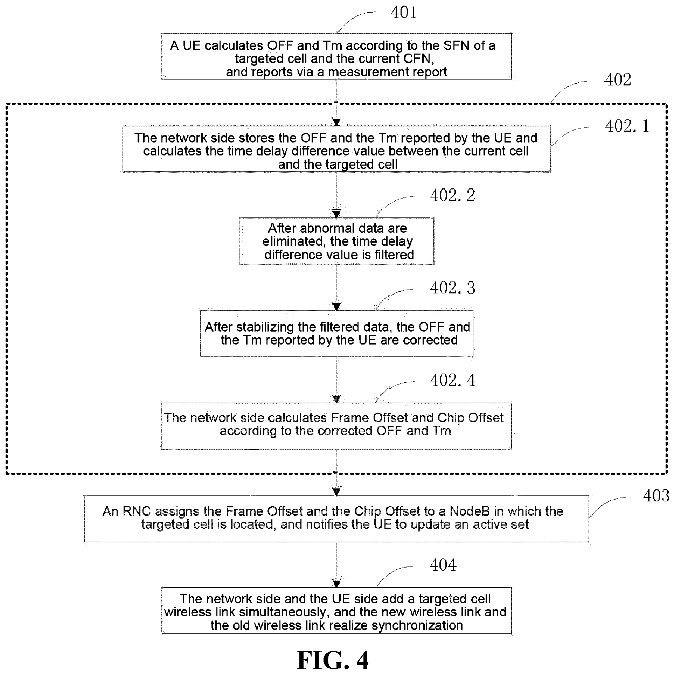

Fig. 4 is a flow chart showing a method for improving success rate of soft handover by correcting the time delay information in a measurement report according to one embodiment of the disclosure. As shown in Fig. 4 and in comparison with Fig. 1, the method includes: 401) a UE calculates OFF and Tm according to the system frame number SFN of a targeted cell and the current connection frame number CFN, and reports via a measurement report; 402) a network side calculates Frame Offset and Chip Offset according to the OFF and the Tm reported by the UE; 403) an RNC assigns the Frame Offset and the Chip Offset to a NodeB in which the targeted cell is located, and notifies the UE to update an active set; 404) the network side and the UE side add a targeted cell wireless link simultaneously, and the new wireless link and the old wireless link realize synchronization. The difference lies in that the process of 402) is divided into four subprocesses: 402.1) calculating, by the network side, the time delay difference value between a cell pair; 402.2) filtering the time delay difference value; 402.3) correcting the time delay information; and 402.4) calculating Frame Offset and Chip Offset after correcting the time delay information.
402.1): The network side stores the OFF and the Tm reported by the UE and calculates the time delay difference value between the current cell and the targeted cell;
   When the UE reports a measurement report to ask for adding a wireless link, the network side saves the time delay difference value (accurate to chip) between the current cell in which the UE is located and the targeted cell reported by the UE. For example, if the OFF and Tm of the current cell (cell ID=12021) in the measurement report currently reported by the UE are respectively 43 and 12807, and the OFF and Tm of the targeted cell (cell ID=32255) are respectively 10 and 10462, then the time delay difference value of the cell pair (12021, 32255) may be stored as (33,2345).

The cell pair refers to a pair of cells, for example, the cell pair (12021,32255) refers to the current cell (12021) and the targeted cell (32255).
402.2) After abnormal data are eliminated from the calculated time delay difference value, a filtration processing is performed according to a certain filtration algorithm;
   The abnormal data refer to undesired data that are determined according to a certain judging rule. For example, if the difference value between the currently input data and the last-time input data exceeds a certain threshold, the currently input data are considered as an abnormal data.

The filtration algorithm may be a filtration algorithm of an Infinite Impulse Response (IIR) digital filter or a Finite Impulse Response (FIR) digital filter, etc.
402.3) Stability determination is performed on the filtered data, and comparison determination is performed on the time delay information reported by the UE after stabilization, and correction will be performed by using the filtration data when the deviation reaches a threshold;
   For example, the data of the filtered stabilized time delay difference value are (31,2345), the OFF and Tm of the current cell (cell ID=12021) in the measurement report currently reported by the UE are respectively 43 and 12807, the OFF and Tm of the targeted cell (cell ID=32255) are respectively 10 and 10462, the time delay difference value is (33,2345), the deviation in comparison with the filtration data reaches 2 frame (1 frame=38400 chip). We assume that the threshold is set as 128 chip, and hence the OFF and Tm of the targeted cell are corrected as 12 and 10462 by replacing the time delay difference value currently reported by the UE with the filtered time delay difference value data (31,2345).

The stability determination refers to determining whether the filtered data are stable according to a certain judging rule. For example, if the difference value between the currently filtered data and the last-time filtered data is smaller than a certain threshold, the filtered data are considered as stable.
402.4) Calculation is performed on the corrected time delay information to generate Frame Offset and Chip Offset.

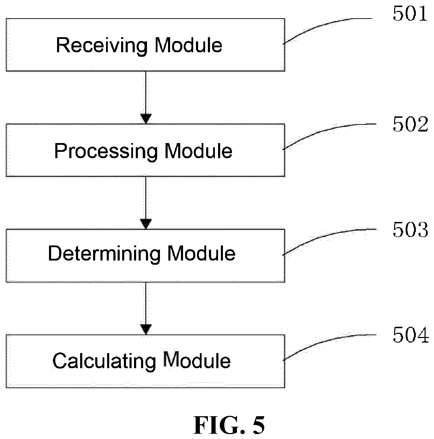

Fig. 5 is a schematic view showing a device for improving success rate of soft handover by correcting the time delay information in a measurement report according to an embodiment of the disclosure. As shown in Fig. 5, the device includes: a receiving module 501, configured for receiving the time delay information reported by the UE and storing it according to cell pair which is accurate to chip; a processing module 502, configured for performing filtration processing on the time delay information stored after eliminating abnormal data; a determining module 503, configured for determining and correcting the correctness of the time delay information reported by the UE by using the filtered stable data; and a calculating module 504, configured for performing a calculation on the corrected time delay information to generate Frame Offset and Chip Offset.

According to an embodiment of the disclosure, the device for improving success rate of soft handover by correcting the time delay information in a measurement report may be a base station controller.

In summary, with the embodiments of the disclosure, the network side stores the time delay information reported by the UE in a way of cell pair and filters the time delay information in each cell pair; the network side determines and corrects the correctness of the time delay information reported by the UE by using the stabilized filtration data.

In summary, the disclosure has the following technical effects:
By the disclosure, the accuracy of the time delay information in a measurement report can be detected in time and thus be corrected in time, thereby improving the success rate of soft handover and lowering the call drop rate.

The disclosure has been illustrated in detail above; however, the disclosure is not limited thereto. Various modifications may be made by one skilled in the art according to the principles of the disclosure. Therefore, all modifications made according to the principles of the disclosure should be construed as falling into the protection scope of the disclosure.

### Industrial Applicability

The above technical solutions of the disclosure can be applied to a process for improving success rate of soft handover. Specifically, a network side obtains a time delay difference value between a current cell and a targeted cell according to time delay information of the current cell and time delay information of the targeted cell that are respectively reported by a user equipment (UE); a stabilized time delay difference value is obtained by performing stability processing on the time delay difference value; and corrected time delay information of the targeted cell is obtained by correcting the time delay information of the targeted cell with the stabilized time delay difference value. By the technical solution of performing a soft handover processing by using the corrected time delay information of the targeted cell, the accuracy of the time delay information in a measurement report can be detected in time and thus be corrected in time, thereby improving the success rate of soft handover and lowering the call drop rate.

## Claims

1. A method of soft handover, comprising obtaining, by a network side, a time delay difference value between a current cell and a targeted cell according to time delay information of the current cell and time delay information of the targeted cell that are respectively reported by a user equipment UE (S201);
obtaining, by the network side, a stabilized time delay difference value by performing a stability processing on the time delay difference value (S202);
obtaining, by the network side, corrected time delay information of the targeted cell by correcting the time delay information of the targeted cell using the stabilized time delay difference value and the time delay information of the current cell (S203); and
performing, by the network side, a soft handover processing by using the corrected time delay information of the targeted cell (S204);
wherein, the step of performing a stability processing on the time delay difference value is **characterized by**:
performing, by the network side, an abnormal data eliminating processing and a filtration processing on the time delay difference value, and obtaining, by the network side, a converged time delay difference value;
performing, by the network side, a stability determination on the converged time delay difference value, and obtaining, by the network side, a stabilized time delay difference value;
wherein, the abnormal data eliminating processing refers to eliminating data in the time delay difference value in which the difference value between the data and its adjacent data exceeds a preset adjacent difference value threshold, and the stability refers to the case that the difference value between adjacent two time delay difference values in the converged time delay difference value is smaller than the preset adjacent difference value threshold.

2. The method according to claim 1, wherein, the time delay information comprises an offset OFF parameter and a maximum delay expansion Tm parameter.

3. The method according to claim 2, wherein, the step of correcting the time delay information of the targeted cell using the stabilized time delay difference value and the time delay information of the current cell (S203) comprises:
comparing, by the network side, an OFF parameter difference value and a Tm parameter difference value of the time delay difference value between the current cell and the targeted cell with a stabilized OFF parameter difference value and a stabilized Tm parameter difference value of the stabilized time delay difference value that is obtained, respectively; and
correcting, by the network side, the OFF parameter and the Tm parameter of the targeted cell when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold.

4. The method according to claim 3, wherein, the step of performing, by the network side, a soft handover processing by using the corrected time delay information of the targeted cell (S204) comprises:
calculating, by the network side, Frame Offset and Chip Offset by using the corrected OFF parameter and the corrected Tm parameter of the targeted cell;
assigning, by the network side, the Frame Offset and the Chip Offset to a NodeB in which the targeted cell is located, and notifying the UE to update an active set;
adding, by the network side, a new targeted cell wireless link simultaneously to the network side and the UE side so as to keep a synchronization of the new link and the old link, thereby realizing successful soft handover.

5. A device of soft handover, comprising a time delay difference value obtaining module (301), configured for obtaining a time delay difference value between a current cell and a targeted cell according to time delay information of the current cell and time delay information of the targeted cell that are respectively reported by a user equipment UE;
a stabilized time delay difference value obtaining module (302), configured for obtaining a stabilized time delay difference value by performing stability processing on the time delay difference value;
correcting module (303), configured for obtaining corrected time delay information of the targeted cell by correcting the time delay information of the targeted cell using the stabilized time delay difference value and the time delay information of the current cell; and
a soft handover processing module (304), configured for performing a soft handover processing by using the corrected time delay information of the targeted cell; **characterized in that** the stabilized time delay difference value obtaining module (302) comprises:
an eliminating and filtering unit, configured for performing an abnormal data eliminating processing and a filtration processing on the time delay difference value, in order to obtain a converged time delay difference value; and
a stability determining unit, configured for performing a stability determination on the converged time delay difference value, to obtaining a stabilized time delay difference value;
wherein, the abnormal data eliminating processing refers to eliminating data in the time delay difference value in which the difference value between adjacent two data exceeds a preset adjacent difference value threshold, and the stability refers to that the difference value between adjacent two time delay difference values in the convergent time delay difference value is lower than the preset adjacent difference value threshold.

6. The device according to claim 5, wherein, the correcting module (303) comprises:
a comparing unit, configured for comparing an OFF parameter difference value and a Tm parameter difference value of the time delay difference value between the current cell and the targeted cell with a stabilized OFF parameter difference value and a stabilized Tm parameter difference value of the stabilized time delay difference value that is obtained, respectively; and
a correcting unit, configured for correcting the OFF parameter and the Tm parameter of the targeted cell when the difference values between the OFF parameter difference value and the Tm parameter difference value of the time delay difference value and the stabilized OFF parameter difference value and the stabilized Tm parameter difference value of the stabilized time delay difference value are greater than a preset parameter threshold;
wherein, the time delay information includes the OFF parameter and the Tm parameter.

7. The device according to claim 6, wherein, the soft handover processing module (304) comprises:
a calculating unit, configured for calculating Frame Offset and Chip Offset by using the corrected OFF parameter and Tm parameter of the targeted cell;
an assigning unit, configured for assigning the Frame Offset and the Chip Offset to a NodeB in which the targeted cell is located, and notifying the UE to update an active set; and
a wireless link adding unit, configured for adding a new targeted cell wireless link simultaneously to the network side and the UE side so as to keep a synchronization of the new link and the old link, thereby realizing successful soft handover.

## Patentansprüche

1. Soft-Handover-Verfahren, umfassend:
Erhalten eines Zeitverzögerungsdifferenzwerts zwischen einer gegenwärtigen Zelle und einer Zielzelle gemäß Zeitverzögerungsinformationen der gegenwärtigen Zelle und Zeitverzögerungsinformationen der Zielzelle, die durch jeweils ein User Equipment UE gemeldet werden, durch eine Netzwerkseite (S201);
Erhalten eines stabilisierten Zeitverzögerungsdifferenzwerts durch Durchführen einer Stabilitätsverarbeitung auf dem Zeitverzögerungsdifferenzwert durch die Netzwerkseite (S202);
Erhalten von durch Korrigieren der Zeitverzögerungsinformationen der Zielzelle unter Verwendung des stabilisierten Zeitverzögerungsdifferenzwerts und der Zeitverzögerungsinformationen der gegenwärtigen Zelle korrigierten Zeitverzögerungsinformationen der Zielzelle durch die Netzwerkseite (S203); und
Durchführen einer Soft-Handover-Verarbeitung unter Verwendung der korrigierten Zeitverzögerungsinformationen der Zielzelle durch die Netzwerkseite (S204);
wobei der Schritt zum Durchführen einer Stabilitätsverarbeitung auf dem Zeitverzögerungsdifferenzwert durch Folgendes gekennzeichnet ist:
Durchführen einer Verarbeitung zur Beseitigung von abnormalen Daten und einer Filterungsverarbeitung auf dem Zeitverzögerungsdifferenzwert durch die Netzwerkseite und Erhalten eines konvergierten Zeitverzögerungsdifferenzwerts durch die Netzwerkseite;
Durchführen einer Stabilitätsbestimmung auf dem konvergierten Zeitverzögerungsdifferenzwert durch die Netzwerkseite und Erhalten eines stabilisierten Zeitverzögerungsdifferenzwerts durch die Netzwerkseite;
wobei die Verarbeitung zur Beseitigung von abnormalen Daten sich auf das Beseitigen von Daten in dem Zeitverzögerungsdifferenzwert bezieht, in dem der Differenzwert zwischen den Daten und ihren benachbarten Daten einen voreingestellten Schwellenwert für benachbarte Differenzwerte überschreitet, und die Stabilität sich auf den Fall bezieht, in dem der Differenzwert zwischen benachbarten zwei Zeitverzögerungsdifferenzwerten in dem konvergierten Zeitverzögerungsdifferenzwert kleiner als der voreingestellte Schwellenwert für benachbarte Differenzwerte ist.

2. Verfahren nach Anspruch 1, wobei die Zeitverzögerungsinformationen einen Versatz-AUS-Parameter und einen maximalen Verzögerungsausdehnungs-Tm-Parameter umfassen.

3. Verfahren nach Anspruch 2, wobei der Schritt zum Korrigieren der Zeitverzögerungsinformationen der Zielzelle unter Verwendung des stabilisierten Zeitverzögerungsdifferenzwerts und der Zeitverzögerungsinformationen der gegenwärtigen Zelle (S203) Folgendes umfasst:
Vergleichen eines AUS-Parameterdifferenzwerts und eines Tm-Parameterdifferenzwerts des Zeitverzögerungsdifferenzwerts zwischen der gegenwärtigen Zelle und der Zielzelle mit einem stabilisierten AUS-Parameter-Differenzwert beziehungsweise einem stabilisierten Tm-Parameter-Differenzwert des stabilisierten Zeitverzögerungswerts, der erhalten wird, durch die Netzwerkseite; und
Korrigieren des AUS-Parameters und des Tm-Parameters der Zielzelle, wenn die Differenzwerte zwischen dem AUS-Parameter-Differenzwert und dem Tm-Parameter-Differenzwert des Zeitverzögerungsdifferenzwerts und dem stabilisierten AUS-Parameter-Differenzwert und dem stabilisierten Tm-Parameter-Differenzwert des stabilisierten Zeitverzögerungsdifferenzwerts größer sind als ein voreingestellter Parameterschwellenwert, durch die Netzwerkseite.

4. Verfahren nach Anspruch 3, wobei der Schritt zum Durchführen einer Soft-Handover-Verarbeitung unter Verwendung der korrigierten Zeitverzögerungsinformationen der Zielzelle durch die Netzwerkseite (S204) Folgendes umfasst:
Berechnen von Frame Offset und Chip Offset unter Verwendung des korrigierten AUS-Parameters und des korrigierten Tm-Parameters der Zielzelle durch die Netzwerkseite;
Zuweisen des Frame Offset und des Chip Offset zu einem NodeB, in dem die Zielzelle sich befindet, und Benachrichtigen des UE zum Aktualisieren eines Active Set, durch die Netzwerkseite;
Hinzufügen einer neuen drahtlosen Zielzellenverbindung gleichzeitig zur Netzwerkseite und zur UE-Seite, um eine Synchronisierung der neuen Verbindung und der alten Verbindung aufrecht zu erhalten und dadurch einen erfolgreichen Soft-Handover auszuführen, durch die Netzwerkseite.

5. Soft-Handover-Vorrichtung, umfassend:
ein Zeitverzögerungswert-Erhaltemodul (301), das ausgestaltet ist, um einen Zeitverzögerungsdifferenzwert zwischen einer gegenwärtigen Zelle und einer Zielzelle gemäß Zeitverzögerungsinformationen der gegenwärtigen Zelle und Zeitverzögerungsinformationen der Zielzelle zu erhalten, die durch jeweils ein User Equipment UE gemeldet werden;
ein Stabilisierter-Zeitverzögerungsdifferenzwert-Erhaltemodul (302), das ausgestaltet ist, um einen stabilisierten Zeitverzögerungsdifferenzwert durch Durchführen von Stabilitätsverarbeitung auf dem Zeitverzögerungsdifferenzwert zu erhalten;
ein Korrekturmodul (303), das ausgestaltet ist, um korrigierte Zeitverzögerungsinformationen der Zielzelle durch Korrigieren der Zeitverzögerungsinformationen der Zielzelle unter Verwendung des stabilisierten Zeitverzögerungsdifferenzwerts und der Zeitverzögerungsinformationen der gegenwärtigen Zelle zu erhalten; und
ein Soft-Handover-Verarbeitungsmodul (304), das ausgestaltet ist, um eine Soft-Handover-Verarbeitung unter Verwendung der korrigierten Zeitverzögerungsinformationen der Zielzelle durchzuführen;
**dadurch gekennzeichnet, dass** das Stabilisierter-Zeitverzögerungsdifferenzwert-Erhaltemodul (302) Folgendes umfasst:
eine Beseitigungs- und Filterungseinheit, die ausgestaltet ist, um eine Verarbeitung zur Beseitigung abnormaler Daten und eine Filterungsverarbeitung auf dem Zeitverzögerungsdifferenzwert durchzuführen, um einen konvergierten Zeitverzögerungsdifferenzwert zu erhalten; und
eine Stabilitätsbestimmungseinheit, die ausgestaltet ist, um eine Stabilitätsbestimmung auf dem konvergierten Zeitverzögerungsdifferenzwert durchzuführen, um einen stabilisierten Zeitverzögerungsdifferenzwert zu erhalten;
wobei die Verarbeitung zur Beseitigung abnormaler Daten sich auf das Beseitigen von Daten in dem Zeitverzögerungsdifferenzwert bezieht, in dem der Differenzwert zwischen benachbarten zwei Daten einen voreingestellten Schwellenwert für benachbarte Differenzwerte überschreitet, und die Stabilität sich darauf bezieht, dass der Differenzwert zwischen benachbarten zwei Zeitverzögerungsdifferenzwerten in dem konvergierenden Zeitverzögerungsdifferenzwert niedriger als der voreingestellte Schwellenwert für benachbarten Differenzwerte ist.

6. Vorrichtung nach Anspruch 5, wobei das Korrekturmodul (303) Folgendes umfasst:
eine Vergleichseinheit, die ausgestaltet ist, um einen AUS-Parameterdifferenzwert und einen Tm-Parameterdifferenzwert des Zeitverzögerungsdifferenzwerts zwischen der gegenwärtigen Zelle und der Zielzelle mit einem stabilisierten AUS-Parameterdifferenzwert beziehungsweise einem stabilisierten Tm-Parameterdifferenzwert des stabilisierten Zeitverzögerungsdifferenzwerts, der erhalten wird, zu vergleichen; und
eine Korrektureinheit, die ausgestaltet ist, um den AUS-Parameter und den Tm-Parameter der Zielzelle zu korrigieren, wenn die Differenzwerte zwischen dem AUS-Parameterdifferenzwert und dem Tm-Parameterdifferenzwert des Zeitverzögerungsdifferenzwerts und dem stabilisierten AUS-Parameterdifferenzwert und dem stabilisierten Tm-Parameterdifferenzwert des stabilisierten Zeitverzögerungsdifferenzwerts größer als ein voreingestellter Parameterschwellenwert sind;
wobei die Zeitverzögerungsinformationen den AUS-Parameter und den Tm-Parameter umfassen.

7. Vorrichtung nach Anspruch 6, wobei das Soft-Handover-Verarbeitungsmodul (304) Folgendes umfasst:
eine Berechnungseinheit, die ausgestaltet ist, um Frame Offset und Chip Offset unter Verwendung des korrigierten AUS-Parameters und Tm-Parameters der Zielzelle zu berechnen;
eine Zuweisungseinheit, die ausgestaltet ist, um den Frame Offset und den Chip Offset einem NodeB zuzuweisen, in dem die Zielzelle sich befindet, und die UE zu benachrichtigen, um ein Active Set zu aktualisieren; und
eine Drahtlose-Verbindungs-Hinzufügungseinheit, die ausgestaltet ist, um eine neue drahtlose Verbindung der Zielzelle gleichzeitig zur Netzwerkseite und zur UE-Seite hinzuzufügen, um eine Synchronisierung der neuen Verbindung und der alten Verbindung aufrecht zu erhalten und dadurch ein erfolgreiches Soft-Handover auszuführen.

## Revendications

1. Procédé de transfert sans coupure, comprenant
l'obtention, par un côté réseau, d'une valeur de différence de retard entre une cellule actuelle et une cellule ciblée en fonction d'informations de retard de la cellule actuelle et d'informations de retard de la cellule ciblée qui sont rapportés respectivement par un équipement utilisateur UE (S201) ;
l'obtention, par le côté réseau, d'une valeur de différence de retard stabilisée en effectuant un traitement de stabilité sur la valeur de différence de retard (S202) ;
l'obtention, par le côté réseau, d'informations de retard corrigées de la cellule ciblée en corrigeant les informations de retard de la cellule ciblée en utilisant la valeur de différence de retard stabilisée et les informations de retard de la cellule actuelle (S203) ; et
l'exécution, par le côté réseau, d'un traitement de transfert sans coupure en utilisant les informations de retard corrigées de la cellule ciblée (S204) ;
dans lequel, l'étape d'exécution d'un traitement de stabilité sur la valeur de différence de retard est **caractérisée par** :
l'exécution, par le côté réseau, d'un traitement d'élimination de données anormales et d'un traitement de filtrage sur la valeur de différence de retard, et l'obtention, par le côté réseau, d'une valeur de différence de retard convergée ;
l'exécution, par le côté réseau, d'une détermination de stabilité sur la valeur de différence de retard convergée, et l'obtention, par le côté réseau, d'une valeur de différence de retard stabilisée ;
dans lequel, le traitement d'élimination de données anormales fait référence à l'élimination de données dans la valeur de différence de retard dans laquelle la valeur de différence entre les données et ses données adjacentes dépasse un seuil de valeur de différence adjacente prédéfini, et la stabilité fait référence au cas où la valeur de différence entre deux valeurs de différence de retard adjacentes dans la valeur de différence de retard convergée est inférieure au seuil de valeur de différence adjacente prédéfini.

2. Procédé selon la revendication 1, dans lequel, les informations de retard comprennent un paramètre de décalage OFF et un paramètre d'expansion de délai maximum Tm.

3. Procédé selon la revendication 2, dans lequel, l'étape de correction des informations de retard de la cellule ciblée en utilisant la valeur de différence de retard stabilisée et les informations de retard de la cellule actuelle (S203) comprend :
la comparaison, par le côté réseau, d'une valeur de différence de paramètre OFF et d'une valeur de différence de paramètre Tm de la valeur de différence de retard entre la cellule actuelle et la cellule ciblée avec une valeur de différence de paramètre OFF stabilisée et une valeur de différence de paramètre Tm stabilisée de la valeur de différence de retard stabilisée qui est obtenue, respectivement ; et
la correction, par le côté réseau, du paramètre OFF et du paramètre Tm de la cellule ciblée lorsque les valeurs de différence entre la valeur de différence de paramètre OFF et la valeur de différence de paramètre Tm de la valeur de différence de retard et la valeur de différence de paramètre OFF stabilisée et la valeur de différence de paramètre Tm stabilisée de la valeur de différence de retard stabilisée sont supérieures à un seuil de paramètre prédéfini.

4. Procédé selon la revendication 3, dans lequel, l'étape d'exécution, par le côté réseau, d'un traitement de transfert sans coupure en utilisant les informations de retard corrigées de la cellule ciblée (S204) comprend :
le calcul, par le côté réseau, d'un Décalage de Trame et d'un Décalage de Bribe en utilisant le paramètre OFF corrigé et le paramètre Tm corrigé de la cellule ciblée ;
l'assignation, par le côté réseau, du Décalage de Trame et du Décalage de Bribe à un NoeudB dans lequel est située la cellule ciblée, et la notification à l'UE de mettre à jour un ensemble actif ;
l'ajout, par le côté réseau, d'une nouvelle liaison sans fil de cellule ciblée simultanément au côté réseau et au côté UE afin de garder une synchronisation de la nouvelle liaison et de l'ancienne liaison, réalisant ainsi un transfert sans coupure réussi.

5. Dispositif de transfert sans coupure, comprenant
un module d'obtention de valeur de différence de retard (301), configuré pour obtenir une valeur de différence de retard entre une cellule actuelle et une cellule ciblée en fonction d'informations de retard de la cellule actuelle et d'informations de retard de la cellule ciblée qui sont rapportés respectivement par un équipement utilisateur UE ;
un module d'obtention de valeur de différence de retard stabilisée (302), configuré pour obtenir une valeur de différence de retard stabilisée en effectuant un traitement de stabilité sur la valeur de différence de retard ;
un module de correction (303), configuré pour obtenir des informations de retard corrigées de la cellule ciblée en corrigeant les informations de retard de la cellule ciblée en utilisant la valeur de différence de retard stabilisée et les informations de retard de la cellule actuelle ; et
un module de traitement de transfert sans coupure (304), configuré pour effectuer un traitement de transfert sans coupure en utilisant les informations de retard corrigées de la cellule ciblée ;
**caractérisé en ce que** le module d'obtention de valeur de différence de retard stabilisée (302) comprend :
une unité d'élimination et de filtrage, configurée pour effectuer un traitement d'élimination de données anormales et un traitement de filtrage sur la valeur de différence de retard, afin d'obtenir une valeur de différence de retard convergée ; et
une unité de détermination de stabilité, configurée pour effectuer une détermination de stabilité sur la valeur de différence de retard convergée, pour obtenir une valeur de différence de retard stabilisée ;
dans lequel, le traitement d'élimination de données anormales fait référence à l'élimination de données dans la valeur de différence de retard dans laquelle la valeur de différence entre deux données adjacentes dépasse un seuil de valeur de différence adjacente prédéfini, et la stabilité fait référence au cas où la valeur de différence entre deux valeurs de différence de retard adjacentes dans la valeur de différence de retard convergente est inférieure au seuil de valeur de différence adjacente prédéfini.

6. Dispositif selon la revendication 5, dans lequel, le module de correction (303) comprend :
une unité de comparaison, configurée pour comparer une valeur de différence de paramètre OFF et une valeur de différence de paramètre Tm de la valeur de différence de retard entre la cellule actuelle et la cellule ciblée avec une valeur de différence de paramètre OFF stabilisée et une valeur de différence de paramètre Tm stabilisée de la valeur de différence de retard stabilisée qui est obtenue, respectivement ; et
une unité de correction, configurée pour corriger le paramètre OFF et le paramètre Tm de la cellule ciblée lorsque les valeurs de différence entre la valeur de différence de paramètre OFF et la valeur de différence de paramètre Tm de la valeur de différence de retard et la valeur de différence de paramètre OFF stabilisée et la valeur de différence de paramètre Tm stabilisée de la valeur de différence de retard stabilisée sont supérieures à un seuil de paramètre prédéfini ;
dans lequel, les informations de retard incluent le paramètre OFF et le paramètre Tm.

7. Dispositif selon la revendication 6, dans lequel, le module de traitement de transfert sans coupure (304) comprend :
une unité de calcul, configurée pour calculer un Décalage de Trame et un Décalage de Bribe en utilisant le paramètre OFF et le paramètre Tm corrigés de la cellule ciblée ;
une unité d'assignation, configurée pour assigner le Décalage de Trame et le Décalage de Bribe à un NoeudB dans lequel est située la cellule ciblée, et notifier à l'UE de mettre à jour un ensemble actif ; et
une unité d'ajout de liaison sans fil, configurée pour ajouter une nouvelle liaison sans fil de cellule ciblée simultanément au côté réseau et au côté UE afin de garder une synchronisation de la nouvelle liaison et de l'ancienne liaison, réalisant ainsi un transfert sans coupure réussi.
